# FASCICULE DE BREVET EUROPEEN

(11) **EP 2 558 325 B1**
(45) Date de publication et mention de la délivrance du brevet: **11.05.2016**
(21) Numéro de dépôt: 11731005.2
(22) Date de dépôt: 11.04.2011
(51) Int. Cl.: B60K 17/34, B60W 30/186, B60K 23/08

(54) **PROCEDE DE COMMANDE DE REPARTITION DE COUPLE POUR UN VEHICULE MOTORISE A QUATRE ROUES MOTRICES ET VEHICULE CORRESPONDANT**
DREHMOMENTVERTEILUNGSSTEUERVERFAHREN FÜR EIN MOTORFAHRZEUG MIT VIERRADANTRIEB UND ENTSPRECHENDES FAHRZEUG
TORQUE DISTRIBUTION CONTROL METHOD FOR A FOUR-WHEEL DRIVE MOTOR VEHICLE AND CORRESPONDING VEHICLE

(30) Priorité: 12.04.2010 FR 1052770
(43) Date de publication de la demande: 20.02.2013
(73) Titulaire: Renault S.A.S., 92100 Boulogne-Billancourt (FR)
(72) Inventeur: GUEGAN, Stéphane, 78000 Versailles (FR); POTHIN, Richard, F-78760 Jouars Pontchartrain (FR); ROMANI, Nicolas, F-75016 Paris (FR)
(86) Numéro de dépôt international: PCT/FR2011/050826
(87) Numéro de publication internationale: WO 2011/128569

(56) Documents cités:
- JP-A- 4 103 433
- JP-A- 61 275 028

## Description

La présente invention concerne, d'une manière générale, les véhicules à quatre roues motrices équipés d'un système de commande de répartition du couple moteur entre un premier essieu et un deuxième essieu capable en outre d'assurer le pilotage d'un coupleur monté entre les deux essieux.

Dans ces véhicules, le couple moteur est réparti entre le premier essieu et le deuxième essieu, la somme des couples transmis aux deux essieux étant égale au couple moteur d'entrée. Le premier essieu est relié à un arbre de transfert auquel est solidarisé le deuxième essieu au moyen dudit coupleur. Seul le premier essieu reçoit en permanence un couple, le deuxième essieu est plus ou moins solidarisé par le coupleur piloté par le système de commande de répartition. Ainsi, le niveau de couple transmis sur chacun des essieux peut être ajusté par le système de commande en fonction, par exemple, d'un mode de fonctionnement du véhicule.

Dans un premier mode de fonctionnement, le couple moteur est intégralement transmis au premier essieu et aucun couple n'est transmis au deuxième essieu. Dans un deuxième mode de fonctionnement, le niveau de couplage de l'actionneur est fixe, et la répartition du couple entre les deux essieux dépend des conditions de roulage (pente, ...) et d'adhérence. Dans un troisième mode de fonctionnement les couples transmis aux deux essieux sont constamment ajustés en fonction des conditions de roulage du véhicule.

Dans les véhicules à quatre roues motrices peut en outre survenir un phénomène de glissement. Le glissement correspond à une différence de vitesse de rotation entre les essieux avant et arrière. Le glissement peut être un phénomène normal, dans le cas par exemple d'un changement de vitesse. Il peut être aussi la conséquence d'une différence de rayon de roulement, dans le cas par exemple d'une mauvaise monte pneumatique ou d'une crevaison. Le glissement est alors permanent et il peut entraîner l'échauffement et/ou la détérioration du coupleur.

En effet, le coupleur est un système de transmission mécanique qui peut à titre d'exemple de réalisation être composé de plusieurs disques baignant dans de l'huile les uns solidarisés à un arbre relié au deuxième essieu les autres à l'arbre de transfert. Dans le cas d'un fonctionnement normal, lorsqu'il y a une différence de vitesse entre l'arbre de transfert et l'arbre relié au deuxième essieu, les disques cisaillent l'huile dont la température augmente puis se dilate et s'épaissit. La pression sur les disques augmente et ils finissent par s'entraîner mutuellement. Ainsi, la différence de vitesse entre les deux arbres décroît et la température de l'huile et du coupleur diminue. Par contre, en présence d'un glissement permanent, les disques continuent de cisailler l'huile qui s'échauffe jusqu'à une possible détérioration du coupleur, par l'échauffement de ce dernier. Dans le cas où le coupleur est basé sur un embrayage piloté, les frottements secs liés au contact entre les disques peuvent entraîner une détérioration par l'usure des disques par réchauffement.

La demande de brevet JP-A-4103433 divulgue le préambule des revendications 1 et 8 décrit un système de commande de la distribution de couple dans un véhicule à quatre roues motrices. Ce système comprend un embrayage de répartition de couple, ainsi que des moyens de détection de glissement, de la vitesse du véhicule et de la différence de diamètre des pneus des quatre roues motrices. Le système permet de diminuer le glissement en utilisant l'embrayage de répartition de couple tout en tenant compte, le cas échéant, d'une différence de diamètre des pneus.

La demande de brevet JP-A-1275028 divulgue le préambule des revendication 1 et 8 décrit un système permettant d'augmenter la manoeuvrabilité d'un véhicule à quatre roues motrices dont les roues n'ont pas exactement le même diamètre. Ce système est muni de détecteurs de vitesse des roues avant et arrière, d'un dispositif de répartition des forces d'entraînement des roues avant et arrière, d'un système de soustraction et d'un dispositif compensateur. Il est ainsi possible de déterminer une différence de vitesse de rotation entre les roues avant et arrière en tenant compte d'un facteur de compensation relatif à une différence de diamètre. Le ratio entre les couples transmis sur l'essieu avant et arrière est alors contrôlé à partir de la différence de vitesse de rotation.

Ces systèmes utilisent une commande de la répartition du couple pour diminuer le glissement mais rien n'est prévu pour protéger le coupleur efficacement dans le cas d'un glissement permanent. Ils ne permettent pas non plus de s'affranchir des glissements résultant de conditions de roulage spécifiques. Ils ne proposent pas de système de commande de la répartition du couple intégré dans le système de gestion des quatre roues motrices.

La présente invention a pour objet un procédé de commande de répartition de couple pour un véhicule motorisé à quatre roues motrices qui soit capable de protéger efficacement le coupleur dans le cas d'un glissement permanent et en particulier, de préserver le coupleur d'un échauffement dû à un glissement permanent.

La présente invention a également pour objet de protéger le coupleur dans le cas d'un glissement permanent provoqué par une mauvaise monte, par une différence de diamètre des roues, une crevaison lente, un sur ou sous gonflage.

L'invention a pour objet de détecter un glissement permanent et de le discriminer d'un glissement normal ou d'un glissement lié à des conditions de roulage spécifiques.

La présente invention a également pour objet de protéger le coupleur sans inutilement arrêter le fonctionnement du mode "quatre roues motrices" suivant un compromis entre la protection du coupleur et la disponibilité du mode "quatre roues motrices" optimum et réglable.

L'invention a encore pour objet un véhicule à quatre roues motrices muni d'un calculateur et d'un coupleur piloté de telle sorte qu'il soit protégé dans le cas d'un glissement permanent.

Selon un premier aspect, il est proposé un procédé de commande de répartition de couple entre les deux essieux d'un véhicule motorisé à quatre roues motrices montées sur deux essieux dans lequel on détermine le glissement représentant la différence de vitesse des deux essieux

Selon une caractéristique générale de ce procédé, on supprime tout transfert de couple vers l'un des deux essieux lorsque la valeur moyenne du glissement au cours d'une durée paramétrable dépasse un seuil.

Ainsi, dans le cas où le transfert de couple se fait au moyen d'un coupleur piloté électroniquement, la protection du coupleur est assurée par le fait qu'en cas de glissement entre les essieux avant et arrière le coupleur peut être ouvert, ce qui évite tout risque d'échauffement. L'ouverture du coupleur présente l'inconvénient de rendre indisponible au conducteur tout mode quatre roues motrices. En utilisant une valeur moyenne de glissement, on s'affranchit des pics de glissement qui peuvent être liés à des circonstances de conduite particulières ainsi que d'une partie du bruit de la chaîne de mesure du glissement. Le mode quatre roues motrices n'est donc pas interrompu de manière intempestive.

De préférence, on détermine les conditions de roulage du véhicule et on détermine le glissement uniquement lorsque certaines conditions de roulage sont réalisées pendant ladite durée paramétrable.

L'ouverture du coupleur ne doit être réalisée que dans le cas d'un glissement permanent et ne doit pas être envisagée si le glissement détecté est en fait provoqué par exemple par le fonctionnement de l'ABS (système d'anti-blocage du freinage) ou par un virage. Pour cela, il est prévu une détection de conditions de roulage. Dans le cas où ces conditions ne sont pas respectées, non seulement l'ouverture du coupleur n'est pas effectuée mais aucun calcul n'est réalisé. Les ressources de calcul sont ainsi économisées.

Selon un autre mode de mise en oeuvre également préféré, on incrémente ou on décrémente un compteur en fonction du glissement déterminé correspondant au glissement maximum autorisé et la suppression du transfert de couple est provoquée uniquement lorsque ledit compteur atteint un premier seuil.

Ainsi, le coupleur n'est pas ouvert de manière intempestive. Il faut que les occurrences de glissement permanent se réalisent un certain nombre de fois pour que l'ouverture soit réalisée. Il est également tenu compte des conditions d'un glissement faible pour rendre plus difficile l'ouverture du coupleur. Cela correspond au fonctionnement réel d'un coupleur. En effet, la température, principal facteur de détérioration d'un coupleur en cas de glissement permanent, décroît s'il n'y a plus de glissement pendant une certaine durée. En tenant compte des périodes de non sollicitation, on se rapproche d'un modèle réel de détérioration d'un coupleur. Le coupleur n'est pas ouvert de manière intempestive, tout en assurant une protection efficace contre les événements qui peuvent effectivement détériorer le coupleur. On obtient ainsi un compromis optimum entre la protection souhaitée du coupleur et la disponibilité du mode quatre roues motrices.

Selon un mode de mise en oeuvre, on teste si la valeur moyenne du glissement au cours de ladite durée paramétrable est supérieure à un deuxième seuil et si l'amplitude de la variation du glissement au cours de ladite durée paramétrable est inférieure à un troisième seuil, on incrémente le compteur si les deux tests sont vérifiés.

Ainsi il n'est pas tenu compte d'aléas entraînant une variation importante de glissement; seul le glissement stabilisé lié à un dimensionnement mécanique problématique tel qu'une différence de rayon de roulement entre les roues avant et arrière est détecté. Avantageusement, cette incrémentation de compteur n'est validée que si la vitesse du véhicule dépasse un seuil prédéterminé.

Selon un autre mode de mise en oeuvre, on teste si la valeur moyenne du glissement au cours de ladite durée paramétrable est inférieure à un quatrième seuil égal audit deuxième seuil moins une constante, et on décrémente le compteur uniquement lorsque la valeur moyenne du glissement est inférieure au quatrième seuil et l'amplitude de la variation de la valeur de glissement au cours de ladite durée paramétrable est inférieure à un troisième seuil.

Ainsi, on ne déclenche la décrémentation que dans le cas où le glissement est dans une phase stabilisée, en deçà de la valeur du deuxième seuil. On évite ainsi une décrémentation liée à une situation de conduite particulière ou à la présence de bruits de mesure. Dans le cas d'un glissement permanent oscillant, on évite une succession de phases d'incrémentation et de décrémentation qui rendrait la détection du glissement oscillant impossible (hystérésis).

Selon un mode de mise en oeuvre avantageux, pour provoquer la suppression du transfert de couple, on peut également tenir compte de la température du coupleur et/ou du couple transféré.

En effet, dans le cas de conditions de roulage très variables, la durée paramétrable peut devenir importante en comparaison de la rapidité de variation des conditions de roulage. Il n'est alors plus possible d'obtenir des conditions de roulage qui restent favorables au cours de ladite durée paramétrable. Il n'est donc plus possible d'incrémenter ou de décrémenter le compteur et le glissement permanent ne peut plus être détecté. Une solution peut consister à faire baisser la durée paramétrable. Cependant une durée paramétrable moins importante entraînerait un mode quatre roues motrices plus régulièrement désactivé. Pour éviter cela, des moyens supplémentaires pour détecter une possibilité de détérioration (température et valeur du couple transmis) du coupleur permettent de pouvoir détecter un glissement permanent alors que les conditions de roulage sont très variables sans faire baisser la durée paramétrable. Ainsi on peut conserver un compromis disponibilité du mode quatre roues motrices, protection du coupleur à l'avantage de la disponibilité. En d'autres termes, le mode quatre roues motrices est plus disponible sans risque de destruction du coupleur grâce à l'information du détecteur thermique et au calcul de la valeur du couple transmis.

Selon un mode de mise en oeuvre avantageux, on détermine le glissement quelque soit le mode de fonctionnement (4x4, 4x2 ou autres) afin de ne pas autoriser le mode 4x4 tout terrain avec un glissement permanent.

Il est préférable pour le conducteur du véhicule que le mode de type quatre roues motrices tout terrains ne soit pas interrompu. En effet, ce mode peut être enclenché alors que le conducteur est en train de réaliser des franchissements, un arrêt du mode quatre roues motrices pourrait donc être très préjudiciable.

Selon un deuxième aspect, il est proposé un véhicule motorisé à quatre roues motrices montées sur deux essieux comprenant un arbre de transfert relié au premier essieu et un coupleur piloté capable de transférer une partie du couple depuis l'arbre de transfert vers le deuxième essieu, des moyens de détermination des vitesses respectives des deux essieux et un système de commande de répartition du couple capable de déterminer une valeur de glissement représentant la différence de vitesse entre les deux essieux et de piloter le coupleur

Selon une caractéristique générale de ce mode de réalisation, le système de commande de répartition de couple est configuré pour piloter le coupleur de façon à supprimer tout transfert de couple via le coupleur, lorsque la valeur moyenne du glissement au cours d'une durée paramétrable dépasse un seuil.

Selon un mode de réalisation, le véhicule comprend des moyens de détermination des conditions de roulage du véhicule et le système de commande de répartition du couple est configuré pour déterminer le glissement uniquement lorsque certaines conditions de roulage sont réalisées pendant ladite durée paramétrable.

Selon un autre mode de réalisation, le système de commande de répartition du couple comporte un compteur qui peut être incrémenté ou décrémenté en fonction du glissement déterminé, uniquement lorsque lesdites conditions de roulage sont respectées pendant la durée paramétrable, le système de commande de répartition du couple est en outre configuré pour supprimer le transfert de couple uniquement lorsque ledit compteur atteint un premier seuil.

Selon un autre mode de réalisation, le coupleur comprend un capteur de température relié au système de commande de répartition de couple.

L'invention sera mieux comprise à l'étude de la description détaillée d'un mode de réalisation pris à titre d'exemple non limitatif et illustré par les dessins annexés sur lesquels :
la figure 1 représente schématiquement un véhicule motorisé à quatre roues motrices;
la figure 2 représente schématiquement les principaux éléments du système de commande du fonctionnement du véhicule;
la figure 3 représente schématiquement les principaux aspects d'un logiciel implanté dans le calculateur du véhicule et permettant la protection du coupleur.

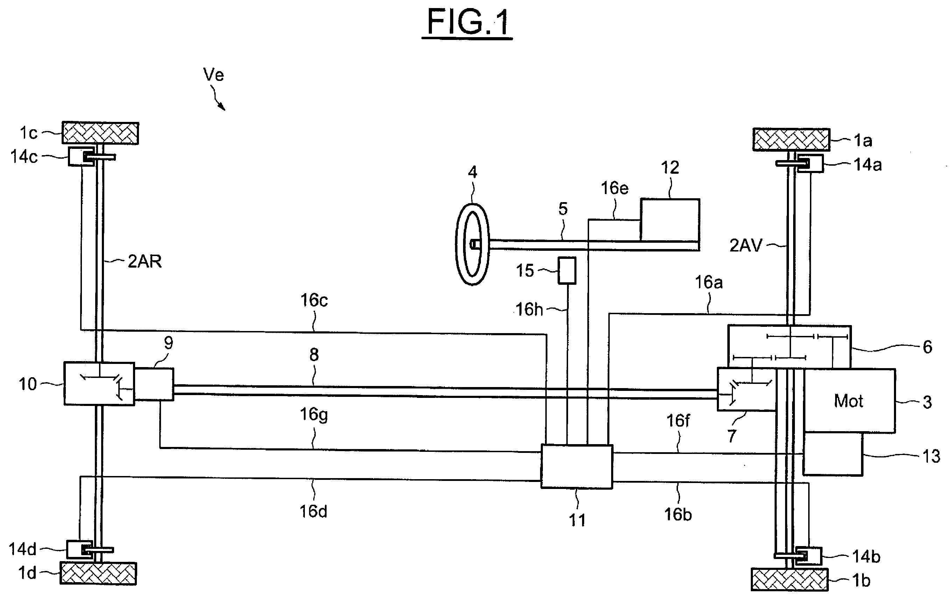

Sur la figure 1 sont illustrés schématiquement les principaux éléments d'un véhicule motorisé Ve à quatre roues motrices avec une transmission permanente du couple moteur sur l'essieu avant 2AV. Ce type de véhicule a été choisi à titre d'exemple. Le moteur du véhicule peut être un moteur thermique 3, un moteur électrique ou une combinaison hybride. La transmission permanente du couple moteur pourrait également être exercée sur l'essieu arrière 2AR.

Le véhicule comprend quatre roues 1a, 1b, 1c, 1d, montées respectivement sur un essieu avant 2AV et un essieu arrière 2AR. Le véhicule comporte également un volant de direction 4 relié à une colonne de direction 5. Le véhicule comprend, en outre, une boîte de vitesses 6 transmettant le couple du moteur 3 à l'essieu avant 2AV et à une boîte de transfert avant 7. Un arbre de transfert 8, entraîné par la boite de transfert 7 est relié par un coupleur 9 à une boîte de transfert de pont arrière 10 de façon à transférer un couple en provenance de la boite de vitesse 6 à l'essieu arrière 2AR.

Le véhicule comprend également un calculateur 11 capable notamment de piloter le coupleur 9, un dispositif de commande de mode 12 et une unité 13 de contrôle du moteur 3 capable de contrôler le fonctionnement du moteur 3 (notamment pour déterminer le couple exercé par le moteur et pour estimer le rapport de vitesse engagé). Le véhicule comprend également quatre capteurs de vitesse de roues 14a, 14b, 14c, 14d, un sur chacune des roues 1a, 1b, 1c, 1d.

Le calculateur 11 est relié à chacun des capteurs de vitesse de roues 14a...14d par des connexions 16a...16d permettant l'échange d'informations. En variante, un calculateur de type ABS et/ou AYC (Active Yaw Control selon un terme anglo-saxon bien connu de l'homme du métier) peut fournir les signaux « vitesses roues ». Le calculateur 11 est également relié au dispositif de commande de mode 12 par une connexion 16e, à l'unité de contrôle moteur 13 par une connexion 16f et au coupleur 9 par une connexion 16g. La connexion électrique 16g permet également la circulation d'un courant de commande pour fermer le coupleur piloté 9. Une unité d'affichage du tableau de bord 15 est également reliée par une connexion 16h au calculateur 11 afin d'afficher au conducteur du véhicule notamment le mode de fonctionnement quatre roues motrices utilisé et l'éventuel surchauffe du coupleur.

Le véhicule à quatre roues motrices peut, en effet, fonctionner selon trois types de mode de fonctionnement distincts.

Dans un premier mode de fonctionnement, la boîte de vitesses 6 entraîne l'essieu avant 2AV, le coupleur 9 est ouvert et ne transfère aucun couple à la boîte de transfert de pont arrière 10. Ce mode est dit mode "4x2", seules les deux roues 1a et 1b de l'essieu avant étant entraînées.

Dans un deuxième mode de fonctionnement, la boîte de vitesses 6 entraîne l'essieu avant 2AV et l'arbre de transfert 8 entraîne le coupleur 9 qui est maintenu totalement fermé. Le coupleur 9 entraîne donc la boîte de transfert de pont arrière 10 de telle sorte qu'une partie du couple moteur pouvant aller de zéro à la valeur maximale du couple transmissible par le coupleur est transférée à l'essieu arrière 2AR. Ce mode, est dit " quatre roues motrices tout terrain".

Dans un troisième mode de fonctionnement, la boîte de vitesses 6 entraîne l'essieu avant 2AV et l'arbre de transfert 8 entraîne le coupleur 9 qui est piloté par le courant du calculateur 11 de façon à être plus ou moins fermé en fonction du couple demandé par chacun des essieux. Ainsi une partie variable du couple moteur est transférée à l'essieu arrière 2AR. Ce mode est dit " quatre roues motrices automatique".

Les différents modes de fonctionnement dépendent de l'état du coupleur 9. La fermeture du coupleur piloté 9 est commandée par le calculateur 11 via la connexion 16g. Ainsi, le niveau de couple transmis depuis l'arbre de transfert 8 vers la boîte de transfert du pont arrière 10 est commandé par le calculateur 11. A cet effet, le calculateur 11 reçoit des informations concernant:
- le fonctionnement du moteur 3 par l'unité de contrôle moteur 13 via la liaison 16f;
- la volonté du conducteur du véhicule par le dispositif de commande de mode 12 qui peut être actionné par le conducteur. Ces informations sont transmises au calculateur 11 via la liaison 16e; et
- la vitesse de rotation des quatre roues 1a...1d déterminée par les quatre capteurs de vitesse de roues 14a...14d. Ces informations sont transmises au calculateur 11 via les quatre liaisons 16a...16d.

En fonction de toutes ces informations, le calculateur 11 est capable de choisir le mode de fonctionnement approprié. Le calculateur 11 est également capable de communiquer au conducteur du véhicule des informations concernant le mode de fonctionnement actif via l'unité d'affichage du tableau de bord 15 et la liaison 16h. Dans le cas où le mode sélectionné est le mode automatique, le calculateur 11 est capable de déterminer le serrage approprié à appliquer au coupleur 9. Les liaisons 16a...16g auxquelles il a été fait référence peuvent, à titre d'exemple de réalisation, être des branches d'un bus de type CAN (Controller Area Network selon un terme anglo-saxon bien connu de l'homme du métier).

Selon l'invention, le calculateur 11 peut en outre émettre en fonction des informations reçues, un signal de commande pour complètement ouvrir le coupleur 9 de façon à éviter un échauffement et ou une usure excessive du coupleur 9 en cas de glissement permanent.

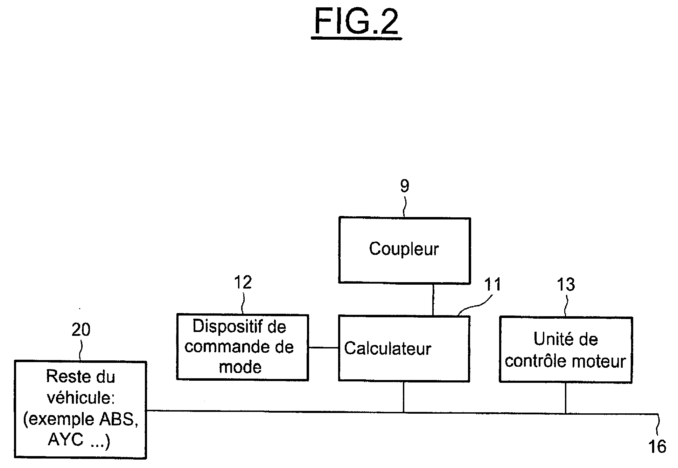

Sur la figure 2, sont illustrés schématiquement les principaux éléments du système de commande du fonctionnement du véhicule. Les éléments déjà illustrés sur la figure 1 portent les mêmes références.

On retrouve sur la figure 2 le calculateur 11 relié par la connexion 16g au coupleur 9 et le dispositif de commande de mode 12 relié au calculateur 11. Le bus de connexion 16 permet d'assurer les liaisons entre le calculateur 11, l'unité de contrôle 13 du moteur 3 et le reste des organes de contrôle et de commande du véhicule représenté sous la forme d'un unique bloc 20. On compte parmi ces organes, par exemple, un système de freinage ABS et un système de contrôle de trajectoire AYC (Active Yaw Control selon un terme anglo-saxon bien connu de l'homme du métier).

Le calculateur 11 peut recevoir du bloc 20, des informations relatives aux conditions de roulage:
- des informations relatives au freinage du véhicule: Système de freinage ABS, frein de stationnement, pédale de frein.
- des informations relatives au fonctionnement du système de contrôle de trajectoire AYC.

Le calculateur 11 peut ensuite par exemple envoyer un signal de commande d'ouverture au coupleur via la connexion électrique 16g en fonction des conditions de roulage, de la volonté du conducteur et de l'état du coupleur.

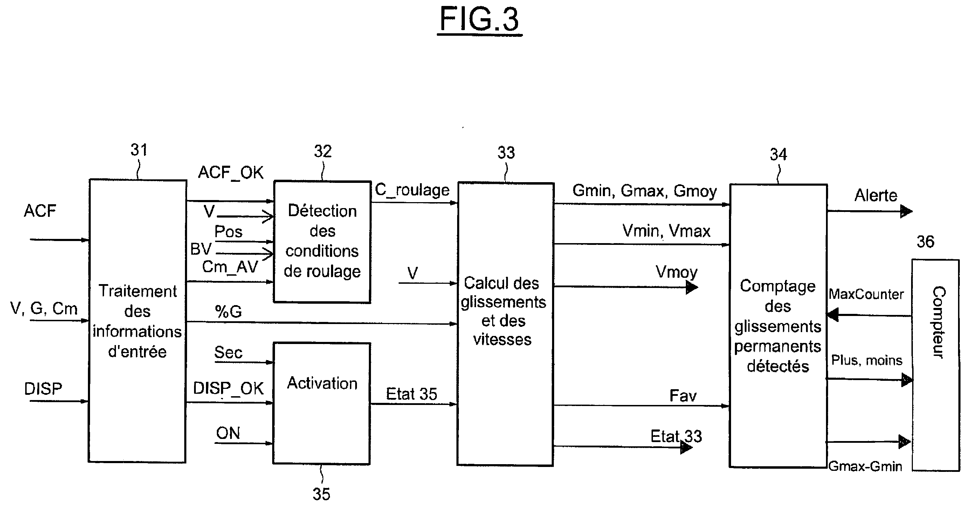

Sur la figure 3, sont illustrées schématiquement sous forme de bloc les sous fonctions d'un logiciel de décision d'ouverture du coupleur 9. Le programme peut être intégré dans le calculateur 11. Dans l'exemple illustré, un premier bloc de traitement 31 reçoit en entrée des variables relatives au fonctionnement du véhicule. Le bloc de traitement 31 reçoit notamment:
- des variables notées ACF. Elles sont relatives à l'état des assistants de conduite et de freinage. Les variables ACF peuvent être transmises par un ou plusieurs programmes de gestion du freinage et d'assistance à la conduite situés par exemple au sein du calculateur 11. Parmi les variables ACF, on peut compter:
   - une variable binaire signalant l'utilisation de l'ABS (Anti Blocage Système);
   - une variable binaire signalant l'utilisation du contrôle de trajectoire AYC;
   - une variable binaire signalant l'utilisation de l'antipatinage (ASR Accelaration Slip Regulation selon un terme anglo-saxon bien connu de l'homme du métier);
   - une variable binaire signalant l'utilisation de la régulation du couple d'inertie du moteur (MSR MotorSchleppmomentRegler selon un terme allemand bien connu de l'homme du métier); et
   - une variable signalant l'utilisation du freinage par le conducteur que ce soit par la pédale ou par le frein parking (frein à main).

A partir des variables ACF, le bloc de traitement 31 détermine si à la fois aucun assistant de conduite (AYC, MSR, ASR), aucun système d'assistance au freinage (ABS) et aucun freinage n'est actif. Si c'est le cas il renvoie à un bloc de détection 32 la valeur binaire ACF_OK avec la valeur 1.

Le bloc de traitement 31 reçoit également des variables V, G, Cm relatives respectivement à la vitesse du véhicule, au glissement entre les deux essieux et au couple fourni par le moteur aux deux essieux. Les variables V et G sont fournies par les quatre capteurs de vitesse de roues 14a, 14b, 14c, 14d tandis que la variable Cm est fournie par l'unité de contrôle 13 du moteur 3.

Plus précisément, la vitesse V du véhicule Ve est estimée à partir de la moyenne des vitesses fournies par les deux capteurs de vitesse de roue arrière 14c et 14d. Le glissement entre les deux essieux est estimé à partir de la différence entre deux vitesses de rotation, celle de l'essieu avant 2AV et celle de l'essieu arrière 2AR. La vitesse de rotation de l'essieu avant peut, à titre d'un exemple de réalisation, être déterminée en faisant la moyenne des vitesses fournies par les deux capteurs de roues avant 14a, 14b. De manière similaire, la vitesse de rotation de l'essieu arrière peut être déterminée en faisant la moyenne des vitesses fournies par les deux capteurs de roues arrière 14c et 14d. Enfin, le couple moteur Cm est estimé par l'unité de contrôle 13 du moteur 3. L'unité de contrôle 13 renvoie également une estimation du rapport de vitesse engagé.

A partir des variables V et G, le bloc de traitement 31 calcule le glissement exprimé en pourcentage par rapport à la vitesse du véhicule %G, il transmet alors cette valeur à un bloc de calcul 33. À partir de la variable Cm et de l'estimation du rapport de vitesse engagée, le bloc de traitement 31 détermine le couple exercé par le moteur sur l'essieu avant Cm_AV, il transmet alors cette valeur au bloc de détection 32.

Le bloc de traitement 31 reçoit aussi des variables DISP relatives à la disponibilité et la validité des informations d'entrée, elles sont utilisées pour la détection de défauts des capteurs ou des informations d'entrée. Parmi les variables DISP, on compte par exemple, les variables suivantes:
- une variable binaire d'état de la détermination du couple moteur;
- une variable binaire d'état de la détection de l'engagement d'une vitesse;
- une variable binaire d'état de la détection de la position de la pédale d'accélération;
- une variable binaire d'état de la détection de l'ABS;
- une variable binaire d'état de la détection du contrôle de trajectoire (AYC);
- une variable binaire d'état de la détection de l'antipatinage (ASR);
- une variable binaire d'état de la détection de la régulation du couple d'inertie du moteur (MSR).

Le bloc de traitement 31 détermine également si les capteurs de vitesse 14a, 14b, 14c, 14d sont en état de marche et si les informations qu'ils transmettent sont en état de marche.

A partir de ces variables et de ces informations, le bloc de traitement 31 détermine si tous les capteurs fonctionnent et toutes les variables requises sont disponibles et valides. Le cas échéant, il transmet à un bloc d'activation 35 une valeur binaire, DISP_OK, relative à la disponibilité des informations.

Le bloc de détection 32 reçoit, outre les variables transmises par le bloc de traitement 31, ACF_OK et Cm_AV, des variables V, POS et BV. La variable V correspond à la variable V en entrée du bloc de traitement 31. La variable POS est une variable décimale dont la valeur exprime la position de la pédale d'accélération. Cette information est, par exemple, fournie par l'unité de contrôle 13 du moteur 3. La variable BV est une variable binaire qui prend la valeur 1 si le rapport de vitesse est bien enclenché dans la boîte de vitesse 6. Cette information est, par exemple, fournie par l'unité de contrôle 13 du moteur 3.

A partir des variables reçues, le bloc de détection 32 est configuré pour détecter si les conditions de roulage pour calculer un glissement permanent sont satisfaites. Si les conditions ne sont pas satisfaites alors le bloc de calcul 33 n'est pas activé. Cela permet de ne réaliser la détection de glissement que lorsque les conditions de roulage sont satisfaites. Ainsi, ne sont pas pris en compte pour la détection du glissement permanent, des glissements normaux dus à des circonstances particulières telles que: le passage d'un rapport de vitesse, la conduite lors d'un virage, le freinage, le fonctionnement d'un assistant de conduite, le lever de pied de la pédale d'accélérateur, le véhicule en pleine accélération.

Le cas échéant le bloc de détection 32 transmet au bloc de calcul 33 une variable C_roulage égale à 1. Pour que le bloc de détection 32 émette une variable C_roulage il faut que toutes les conditions ci-dessous soient respectées:
- la variable ACF_OK soit égale à 1, cela permet d'éviter que le calcul de glissement permanent intervienne dans le cas où le véhicule est en freinage ou alors qu'un assistant de conduite ou de freinage est actif.
- la variable V soit supérieure à un premier seuil, cela permet d'éviter que le calcul de glissement permanent intervienne dans le cas où le véhicule est en virage.
- la variable Pos soit supérieure à un deuxième seuil: cela permet d'éviter le calcul de glissement permanent si des levers de pied du conducteur interviennent.
- la variable BV soit égale à 1: cela permet d'éviter que le calcul de glissement permanent intervienne alors que le véhicule est en train de changer de vitesse.
- la variable Cm_AV soit inférieure à un troisième seuil: cela permet d'éviter que le calcul de glissement permanent intervienne alors que le véhicule est en pleine accélération.

Les trois seuils auxquels il est fait référence sont paramétrables. Cela permet d'adapter les conditions pour la détection d'un glissement permanent en fonction de la conduite du conducteur ou du terrain de roulage. Par exemple, la vitesse minimum à partir de laquelle il est prévu une détection de glissement peut être remontée dans le cas d'une conduite sportive.

Le bloc d'activation 35 reçoit, outre la variable DISP_OK, une variable de sécurité Sec et une variable de mise en service ON. La variable Sec est binaire, elle vaut 1 si aucun défaut de la part d'autres calculateurs ou programmes n'est détecté. La variable ON est également binaire elle vaut 1 si la fonction d'alerte de glissement permanent est mise en service. A partir de ces informations, le bloc d'activation 35 renvoie au bloc de calcul 33 une variable d'activation Etat 35. Cette variable vaut 1 si les variables DISP_OK, Sec et ON ont la valeur 1. A titre optionnel, le bloc d'activation 35 peut recevoir une valeur du dispositif de commande de mode 12. Le cas échéant, il renvoie une valeur Etat 35 égale à 1 uniquement lorsque le mode quatre roues motrices automatique est sélectionné par le conducteur du véhicule.

Le bloc de calcul 33 reçoit, outre les variables C_roulage, %G et Etat 35, une variable V. La variable V correspond à la vitesse V en entrée du bloc de traitement 31. A partir de la variable %G et de la vitesse V, le bloc de calcul 33 calcule des variables de vitesse Vmin, Vmax, Vmoy et de glissement Gmin, Gmax, Gmoy du véhicule. Les valeurs Gmin, Gmax, Gmoy correspondent respectivement à la valeur de glissement minimum, maximum et moyen pendant une durée paramétrable MinTime. Les valeurs Vmin, Vmax, Vmoy correspondent respectivement à la vitesse du véhicule minimum, maximum et moyenne au cours de la durée MinTime. Ces calculs sont réalisés par le bloc de calcul 33 uniquement lorsque les valeurs binaires C_roulage et Etat 35 sont égales à 1.

Le bloc de calcul 33 calcule également une valeur binaire Fav relative à la réalisation de conditions requises. La valeur de Fav passe à 1 si les conditions de roulage C_roulage sont vérifiées au cours de la durée MinTime. Le bloc de calcul 33 calcule aussi une valeur binaire Etat 33 sur 2 bits correspondant à l'état sur un diagramme de flux de la sous fonction du bloc de calcul 33. La sous fonction du bloc 33 peut en effet être représentée sous la forme d'un diagramme à 4 états:
- l'état -1 correspond à l'état par défaut du bloc 33.
- l'état 0 correspond à un état d'initialisation. Les variables de vitesse et de glissement à calculer sont initialisées à 0.
- l'état 1 est actif dès que la variable binaire C_roulage passe à 1, et est inactif dès que celle-ci repasse à 0. Tant que C_roulage reste égal à 1, on calcule les variables de vitesse et de glissement.
- l'état 2 est actif si la valeur C_roulage est égale 1 pendant une durée minimum paramétrable, la variable binaire Fav passe alors de la valeur 0 à 1. C'est à l'instant d'activation de cet état 2 que sont envoyées les variables de vitesse et de glissement ainsi que la variable Fav vers un bloc de comptage 34.

Le bloc de comptage 34 filtre ces variables pour commander s'il y a lieu le déclenchement d'une alerte de glissement permanent via la variable binaire Alerte. Quand la variable Alerte passe à 1, l'alerte de glissement permanent est enclenchée. C'est cette alerte qui déclenche l'ouverture du coupleur piloté 9 par le calculateur 11 via la connexion 16g. Plus précisément, le bloc de comptage 34 réalise à la fois la détection de glissement permanent, le comptage des occurrences de glissement permanent, et la génération de l'alerte. Pour cela, le bloc de comptage 34 coopère avec un compteur 36. Le compteur 36 est contrôlé par le bloc de comptage 34 pour être incrémenté (plus) à chaque occurrence de glissement permanent détectée. Quand le compteur 36 atteint un seuil paramétrable MaxCounter, la valeur de la variable Alerte passe à 1.

L'incrémentation (plus) intervient dès lors que la variable Fav est égale à 1, que l'amplitude de la variation de glissement (Gmax-Gmin) au cours d'une durée MinTime est inférieure à un autre seuil paramétrable (MaxDeltaSlip) et qu'au cours de la durée MinTime le glissement moyen Gmoy est supérieur à une valeur de seuil MinWheelSlip paramétrable. Le compteur peut également être décrémenté (moins) lorsque la variable Fav est égale à 1, l'amplitude de la variation de glissement (Gmax-Gmin) est inférieure à MaxDeltaSlip au cours de la durée MinTime et le glissement moyen est inférieur à un seuil égal audit deuxième seuil moins une constante MinWheelSlip- Constant. La constante (Constant) peut avantageusement être choisie avec une valeur relative à l'hystérésis (WheelSlipHyst).

L'invention telle qu'elle a été décrite permet une protection du coupleur efficace sans consommer beaucoup de ressources mémoire ni générer des interruptions de fonctionnement du mode 4x4 inutiles. L'invention permettant de détecter le glissement permanent peut aussi être appliquée à la révélation d'un problème qui crée un tel glissement permanent. Ainsi, il est possible de détecter une usure de pneus, une pression de gonflage inadaptée, ou une charge trop importante du véhicule.

Les valeurs des seuils qui enclenchent des conditions de roulage favorables sont paramétrables, il est donc possible de privilégier la non interruption du mode quatre roues motrices sur la protection du coupleur ou de faire l'inverse. Par exemple, on peut dans le bloc de calcul 33 baisser la vitesse minimum ou augmenter la durée paramétrable MinTime pour favoriser la protection du coupleur. Il est ainsi possible d'ajuster le compromis protection du coupleur/disponibilité du mode quatre roues motrices.

## Revendications

1. Procédé de commande de répartition de couple entre les deux essieux (2AV, 2AR) d'un véhicule motorisé à quatre roues motrices (1a, 1b, 1c, 1d) montées sur deux essieux dans lequel on détermine le glissement représentant la différence de vitesse des deux essieux **caractérisé en ce qu'**on supprime tout transfert de couple vers l'un des deux essieux lorsque la valeur moyenne du glissement au cours d'une durée paramétrable (MinTime) dépasse un seuil.

2. Procédé selon la revendication 1 dans lequel on détermine les conditions de roulage du véhicule et on détermine le glissement uniquement lorsque certaines conditions de roulage (C_roulage) sont réalisées pendant ladite durée paramétrable (MinTime).

3. Procédé de commande de répartition du couple pour un véhicule selon l'une quelconque des revendications 1 ou 2 dans lequel on incrémente ou on décrémente un compteur (36) en fonction du glissement déterminé et la suppression du transfert de couple est provoquée uniquement lorsque ledit compteur atteigne un premier seuil (MaxCounter).

4. Procédé de commande de répartition du couple d'un véhicule selon la revendication 3 dans lequel on teste si la valeur moyenne du glissement (Gmoy) au cours de ladite durée paramétrable (MinTime) est supérieure à un deuxième seuil (MinWheelSlip) et si l'amplitude de la variation du glissement (Gmax-Gmin) au cours de ladite durée paramétrable (MinTime) est inférieure à un troisième seuil (MaxDeltaSlip), on incrémente le compteur si les deux tests sont vérifiés.

5. Procédé de commande de répartition du couple d'un véhicule selon la revendication 4 dans lequel on teste si la valeur moyenne du glissement (Gmoy) au cours de ladite durée paramétrable (MinTime) est inférieure à un quatrième seuil égal audit deuxième seuil moins une constante (MinWheelSlip-Constant), et on décrémente le compteur uniquement lorsque la valeur moyenne du glissement est inférieure au quatrième seuil et l'amplitude de la variation du glissement (Gmax-Gmin) au cours de ladite durée paramétrable (MinTime) est inférieure à un troisième seuil.

6. Procédé de commande de répartition du couple d'un véhicule selon l'une des revendications 1 à 5 dans lequel, pour provoquer la suppression du transfert de couple on tient compte de la température du coupleur et/ou du couple transféré.

7. Procédé de commande de répartition du couple d'un véhicule selon l'une des revendications 2 à 6 dans lequel on détermine le glissement uniquement si un mode de type quatre roues motrices automatique correspondant à une répartition de couple variable entre l'essieu avant (2AV) et l'essieu arrière (2AR) est sélectionné.

8. Véhicule motorisé (Ve) à quatre roues motrices (1a, 1b, 1c, 1d) montées sur deux essieux (2AV, 2AR) comprenant un arbre de transfert (8) relié au premier essieu et un coupleur piloté (9) capable de transférer une partie du couple depuis l'arbre de transfert (8) vers le deuxième essieu, des moyens de détermination des vitesses respectives des deux essieux et un système de commande de répartition du couple (11) capable de déterminer une valeur de glissement représentant la différence de vitesse entre les deux essieux et de piloter le coupleur
**caractérisé en ce que** le système de commande de répartition de couple est configuré pour piloter le coupleur (9) de façon à supprimer tout transfert de couple via le coupleur, lorsque la valeur moyenne du glissement au cours d'une durée paramétrable (MinTime) dépasse un seuil.

9. Véhicule selon la revendication 8 comprenant des moyens de détermination des conditions de roulage du véhicule et dans lequel le système de commande de répartition du couple est configuré pour déterminer le glissement uniquement lorsque certaines conditions de roulage sont réalisées (C_roulage) pendant ladite durée paramétrable (MinTime).

10. Véhicule selon la revendications 9 dans lequel le système de commande de répartition du couple comporte un compteur (36) qui peut être incrémenté ou décrémenté en fonction du glissement déterminé, uniquement lorsque lesdites conditions de roulage (C_roulage) sont respectées pendant la durée paramétrable (MinTime), le système de commande de répartition du couple est en outre configuré pour supprimer le transfert du couple uniquement lorsque ledit compteur atteint un premier seuil (MaxCounter).

11. Véhicule selon l'une quelconque des revendications 8 à 10 dans lequel le coupleur (9) comprend un capteur de température relié au système de commande de répartition du couple.

## Patentansprüche

1. Verfahren zur Steuerung der Verteilung des Drehmoments zwischen den zwei Achsen (2AV, 2AR) eines Kraftfahrzeugs angetrieben mit vier Antriebsrädern (1a, 1b, 1c, 1d), die auf zwei Achsen angebracht sind, wobei der Schlupf bestimmt wird, der die Drehzahldifferenz der zwei Achsen repräsentiert, **dadurch gekennzeichnet, dass** jede Übertragung von Drehmoment auf eine der zwei Achsen unterdrückt wird, wenn der Mittelwert des Schlupfes während einer parametrierbaren Dauer (MinTime) einen Schwellenwert überschreitet.

2. Verfahren nach Anspruch 1, wobei die Fahrbedingungen des Fahrzeugs bestimmt werden und der Schlupf nur dann bestimmt wird, wenn gewisse Fahrbedingungen (C_roulage) während der parametrierbaren Dauer (MinTime) erfüllt sind.

3. Verfahren zur Steuerung der Verteilung des Drehmoments für ein Fahrzeug nach einem der Ansprüche 1 oder 2, wobei ein Zähler (36) in Abhängigkeit von dem bestimmten Schlupf inkrementiert oder dekrementiert wird und die Unterdrückung der Drehmomentübertragung nur dann hervorgerufen wird, wenn der Zähler einen ersten Schwellenwert (MaxCounter) erreicht.

4. Verfahren zur Steuerung der Verteilung des Drehmoments eines Fahrzeugs nach Anspruch 3, wobei geprüft wird, ob der Mittelwert des Schlupfes (Gmoy) während der parametrierbaren Dauer (MinTime) größer als ein zweiter Schwellenwert (MinWheelSlip) ist, und ob die Amplitude der Schwankung des Schlupfes (Gmax-Gmin) während der parametrierbaren Dauer (MinTime) kleiner als ein dritter Schwellenwert (MaxDeltaSlip) ist, und wobei der Zähler inkrementiert wird, falls die beiden geprüften Bedingungen erfüllt sind.

5. Verfahren zur Steuerung der Verteilung des Drehmoments eines Fahrzeugs nach Anspruch 4, wobei geprüft wird, ob der Mittelwert des Schlupfes (Gmoy) während der parametrierbaren Dauer (MinTime) kleiner als ein vierter Schwellenwert ist, der gleich dem zweiten Schwellenwert abzüglich einer Konstanten (MinWheelSlip-Constant) ist, und wobei der Zähler nur dann dekrementiert wird, wenn der Mittelwert des Schlupfes kleiner als der vierte Schwellenwert ist und die Amplitude der Schwankung des Schlupfes (Gmax-Gmin) während der parametrierbaren Dauer (MinTime) kleiner als ein dritter Schwellenwert ist.

6. Verfahren zur Steuerung der Verteilung des Drehmoments eines Fahrzeugs nach einem der Ansprüche 1 bis 5, wobei, um die Unterdrückung der Drehmomentübertragung hervorzurufen, die Temperatur der Kupplungsvorrichtung und/oder das übertragene Drehmoment berücksichtigt werden.

7. Verfahren zur Steuerung der Verteilung des Drehmoments eines Fahrzeugs nach einem der Ansprüche 2 bis 6, wobei der Schlupf nur dann bestimmt wird, wenn eine Betriebsart vom Typ eines automatischen Vierradantriebs ausgewählt ist, die einer variablen Verteilung des Drehmoments zwischen der Vorderachse (2AV) und der Hinterachse (2AR) entspricht.

8. Kraftfahrzeug (Ve) mit vier Antriebsrädern (1a, 1b, 1c, 1d), die auf zwei Achsen (2AV, 2AR) angebracht sind, welches eine Übertragungswelle (8), die mit der ersten Achse und einer vorgesteuerten Kupplungsvorrichtung (9), die in der Lage ist, einen Teil des Drehmoments von der Übertragungswelle (8) auf die zweite Achse zu übertragen, verbunden ist, Mittel zur Bestimmung der jeweiligen Drehzahlen der zwei Achsen und ein System zur Steuerung der Verteilung des Drehmoments (11), das in der Lage ist, einen Schlupfwert zu bestimmen, der die Drehzahldifferenz zwischen den zwei Achsen repräsentiert, und die Kupplungsvorrichtung vorzusteuern, aufweist,
**dadurch gekennzeichnet, dass** das System zur Steuerung der Verteilung des Drehmoments dafür ausgelegt ist, die Kupplungsvorrichtung (9) derart vorzusteuern, dass jede Übertragung von Drehmoment über die Kupplungsvorrichtung unterdrückt wird, wenn der Mittelwert des Schlupfes während einer parametrierbaren Dauer (MinTime) einen Schwellenwert überschreitet.

9. Fahrzeug nach Anspruch 8, welches Mittel zur Bestimmung der Fahrbedingungen des Fahrzeugs aufweist, und wobei das System zur Steuerung der Verteilung des Drehmoments dafür ausgelegt ist, den Schlupf nur dann zu bestimmen, wenn gewisse Fahrbedingungen (C_roulage) während der parametrierbaren Dauer (MinTime) erfüllt sind.

10. Fahrzeug nach Anspruch 9, wobei das System zur Steuerung der Verteilung des Drehmoments einen Zähler (36) aufweist, welcher nur dann in Abhängigkeit von dem bestimmten Schlupf inkrementiert oder dekrementiert werden kann, wenn die Fahrbedingungen (C_roulage) während der parametrierbaren Dauer (MinTime) erfüllt sind, wobei das System zur Steuerung der Verteilung des Drehmoments außerdem dafür ausgelegt ist, die Übertragung des Drehmoments nur dann zu unterdrücken, wenn der Zähler einen ersten Schwellenwert (MaxCounter) erreicht.

11. Fahrzeug nach einem der Ansprüche 8 bis 10, wobei die Kupplungsvorrichtung (9) einen Temperatursensor aufweist, der mit dem System zur Steuerung der Verteilung des Drehmoments verbunden ist.

## Claims

1. Method for controlling the distribution of torque between the two axles (2FT, 2RR) of a motor vehicle with four driving wheels (1a, 1b, 1c, 1d) mounted on two axles wherein the slip representing the difference in speed of the two axles is determined, **characterized in that** any transfer of torque to one of the two axles is suppressed when the average value of the slip over a configurable duration (MinTime) exceeds a threshold.

2. Method according to Claim 1, wherein the driving conditions of the vehicle are determined and the slip is determined only when certain driving conditions (T_driving) are fulfilled over said configurable duration (MinTime).

3. Method for controlling the distribution of torque for a vehicle according to either Claim 1 or Claim 2, wherein a counter (36) is incremented or decremented as a function of the determined slip and the suppression of the transfer of torque is brought about only when said counter reaches a first threshold (MaxCounter).

4. Method for controlling the distribution of torque for a vehicle according to Claim 3, wherein a test is performed on whether the average value of the slip (Savg) over said configurable duration (MinTime) is greater than a second threshold (MinWheelSlip) and whether the amplitude of the variation in the slip (Smax-Smin) over said configurable duration (MinTime) is less than a third threshold (MaxDeltaSlip), and the counter is incremented if both tests are verified.

5. Method for controlling the distribution of torque for a vehicle according to Claim 4, wherein a test is performed on whether the average value of the slip (Savg) over said configurable duration (MinTime) is less than a fourth threshold equal to said second threshold minus a constant (MinWheelSlip-Constant), and the counter is decremented only when the average value of the slip is less than the fourth threshold and the amplitude of the variation in the slip (Smax-Smin) over said configurable duration (MinTime) is less than a third threshold.

6. Method for controlling the distribution of torque for a vehicle according to one of Claims 1 to 5, wherein, in order to bring about the suppression of the transfer of torque, the coupling temperature and/or the transferred torque is taken into account.

7. Method for controlling the distribution of torque for a vehicle according to one of Claims 2 to 6, wherein the slip is determined only if an automatic four-wheel drive mode, corresponding to a variable torque distribution between the front axle (2FT) and the rear axle (2RR), is selected.

8. Motor vehicle (Ve) with four driving wheels (1a, 1b, 1c, 1d) mounted on two axles (2FT, 2RR) comprising a transfer shaft (8) linked to the first axle and a controlled coupling (9) capable of transferring a part of the torque from the transfer shaft (8) to the second axle, means for determining the respective speeds of the two axles and a system for controlling the distribution of the torque (11) capable of determining a slip value representing the difference in speed between the two axles and capable of controlling the coupling,
**characterized in that** the torque distribution control system is configured to control the coupling (9) so as to suppress any transfer of torque via the coupling, when the average value of the slip over a configurable duration (MinTime) exceeds a threshold.

9. Vehicle according to Claim 8, comprising means for determining the driving conditions of the vehicle and wherein the torque distribution control system is configured to determine the slip only when certain driving conditions are fulfilled (T_driving) over said configurable duration (MinTime).

10. Vehicle according to Claim 9, wherein the torque distribution control system includes a counter (36) which can be incremented or decremented as a function of the determined slip, only when said driving conditions (T_driving) are met over the configurable duration (MinTime), and the torque distribution control system is also configured to suppress the transfer of torque only when said counter reaches a first threshold (MaxCounter).

11. Vehicle according to any one of Claims 8 to 10, wherein the coupling (9) comprises a temperature sensor linked to the torque distribution control system.
